# EUROPEAN PATENT APPLICATION

(11) **EP 4 507 192 A1**
(43) Date of publication of application: **12.02.2025**
(21) Application number: 23790954.4
(22) Date of filing: 17.03.2023
(51) Int. Cl.: H02P 29/028

(54) **CONTROL METHOD AND APPARATUS FOR ELECTRIC MOTOR, AND ELECTRIC DEVICE AND STORAGE MEDIUM**

(30) Priority: 22.04.2022 CN 202210429619
(71) Applicant: CONTEMPORARY AMPEREX TECHNOLOGY (HONG KONG) LIMITED, Hong Kong (CN)
(72) Inventor: HUANG, Xiaojian, Ningde, Fujian 352100 (CN); CAI, Feilong, Ningde, Fujian 352100 (CN); PAN, Xianxi, Ningde, Fujian 352100 (CN); DAN, Zhimin, Ningde, Fujian 352100 (CN); CHEN, Wei, Ningde, Fujian 352100 (CN)
(74) Representative: von Tietzen und Hennig, Nikolaus
(86) International application number: PCT/CN2023/082224
(87) International publication number: WO 2023/202293

(57) **Abstract**

The present application discloses a motor control method and apparatus, an electrical device, and a storage medium, where a neutral wire of a motor is connected to at least one standby power device, the method including: determining motor faulty phases if it is detected in an operating process of the motor that the motor is faulty; and controlling the motor faulty phases to switch from currently connected primary power devices to the standby power device. **In** the present application, when the motor is faulty, switching from the primary power devices for the motor faulty phases to the standby power device is performed. By replacing the primary power devices corresponding to the motor faulty phases with standby power devices, the motor can continue to operate after it is faulty, and there is no safety risk due to the motor faulty phases during the operating process. Moreover, continued operation will not increase the degree of damage to the motor and will not shorten the life of the motor.

## Description

### CROSS-REFERENCE TO RELATED APPLICATION

The present application claims priority to Chinese patent application 202210429619.9 entitled "MOTOR CONTROL METHOD AND APPARATUS, ELECTRICAL DEVICE, AND STORAGE MEDIUM" filed on April 22, 2022, the entire contents of which are incorporated herein by reference.

### TECHNICAL FIELD

The present application belongs to the technical field of motor control, and in particular relates to a motor control method and apparatus, an electrical device, and a storage medium.

### BACKGROUND

At present, electric vehicles, electric airplanes, and other electric devices usually have a power battery and a motor, where the power battery supplies power to the motor, and the motor converts electrical energy into mechanical energy to drive the electric device.

If the motor is faulty, fault-tolerant control of the motor is required to ensure that the electric device continues to operate. In the fault-tolerant control of a motor in the related art, the current or torque of the motor is usually controlled by a fault-tolerant control algorithm after the motor is faulty.

However, fault-tolerant control of a motor by controlling the current or torque, or the like, through a software algorithm is limited by computational errors of the algorithm, and it is difficult to realize precise fault-tolerant control.

### SUMMARY OF THE INVENTION

In view of the above problem, the present application proposes a motor control method and apparatus, an electrical device, and a storage medium.

In a first aspect, the present application provides a motor control method, where a neutral wire of a motor is connected to at least one standby power device, the method including:
determining motor faulty phases if it is detected in an operating process of the motor that the motor is faulty; and
controlling the motor faulty phases to switch from currently connected primary power devices to the standby power device.

In an embodiment of the first aspect, after determining that the motor is faulty, motor faulty phases are judged, and switching from primary power devices for the motor faulty phases to the standby power device is performed. By replacing the primary power devices corresponding to the motor faulty phases with standby power devices, the motor can continue to operate after it is faulty, and there is no safety risk due to the motor faulty phases during the operating process. Moreover, continued operation will not increase the degree of damage to the motor and will not shorten the life of the motor.

In some embodiments, the method further includes:
determining a number of faulty phases of the motor; and
performing, when the number of faulty phases is smaller than or equal to a number of the standby power devices, the operation of controlling the motor faulty phases to switch from currently connected primary power devices to the standby power devices.

In this embodiment, after the motor is faulty, a number of faulty phases is determined, and when the number of faulty phases is smaller than or equal to a number of the standby power devices, switching from the primary power devices for the motor faulty phases to the standby power device is performed. By replacing primary power devices corresponding to all motor faulty phases with standby power devices, it is ensured that the motor can continue to operate safely after it is faulty. Moreover, continued operation will not increase the degree of damage to the motor and will not shorten the life of the motor.

In some embodiments, said determining motor faulty phases includes:
acquiring motor sampling parameters for the operating process of the motor; and
determining motor faulty phases according to the motor sampling parameters.

In this embodiment, the motor faulty phases are determined based on the motor sampling parameters, where the motor sampling parameters are operating parameters of the motor that are collected in real time in the operating process of the motor, which can accurately reflect the operating condition of the motor, so that the motor phases that are faulty can be accurately determined based on the motor sampling parameters, and the accuracy of determining the motor faulty phases in this way is very high.

In some embodiments, the motor sampling parameters include at least one of a phase current and a phase voltage of each phase of the motor, a temperature of each phase of winding, and a temperature of each primary power device connected to the motor.

The motor sampling parameters include a phase current, a phase voltage and a winding temperature of each phase as well as a temperature of each primary power device, and so on. These parameters can accurately reflect the operating condition of the motor, and the motor faulty phases can be accurately determined based on these parameters after the motor is faulty.

In some embodiments, the motor sampling parameters include a phase current of each phase of the motor; and said determining motor faulty phases according to the motor sampling parameters includes:
determining, if there is a phase current higher than a preset current threshold, a phase to which the phase current higher than the preset current threshold belongs as a motor faulty phase.

Since the occurrence of a short-circuit in a phase makes the impedance of that short-circuited phase decrease and approach 0, the phase current of that short-circuited phase will be very high. Accordingly, the control module is pre-configured with a maximum value that the phase current can reach in the case where no short-circuit occurs, and based on a magnitude relationship between the phase currents and this maximum value, a motor faulty phase in which a short-circuit occurs can be accurately identified.

In some embodiments, the motor sampling parameters include a phase current of each phase of the motor; and said determining motor faulty phases according to the motor sampling parameters includes:
separately calculating a difference absolute value between phase currents of any two phases; and
determining, if there is a difference absolute value larger than a preset difference threshold, a phase with the highest phase current out of two phases corresponding to the difference absolute value larger than the preset difference threshold as a motor faulty phase.

In this embodiment, considering that the impedance of a short-circuited phase is reduced by a lot compared to a phase that is not short-circuited, which results in the phase current of the short-circuited phase being much higher than those of other phases, a motor faulty phase in which a short-circuit occurs can also be accurately identified from the changes in the relative magnitudes of the phase currents of the phases.

In some embodiments, the motor sampling parameters include a phase voltage of each phase of the motor; and said determining motor faulty phases according to the motor sampling parameters includes:
determining, if there is a phase voltage with voltage change abnormality, a phase corresponding to the phase voltage with voltage change abnormality as a motor faulty phase.

In this embodiment, considering that when a short-circuit occurs in a phase of the motor, the resistance of the short-circuited phase tends to approach zero, which is equivalent to a wire, and at this time, the phase voltage corresponding to the short-circuited phase becomes very low and the phase voltage tends to approach zero, whereas if a broken-circuit occurs in a phase of the motor, the resistance of the broken-circuited phase is very large and there is almost no current passing through the broken-circuited phase, and at this time, the voltage of the broken-circuited phase becomes very high, a motor faulty phase in which a short-circuit or a broken-circuit occurs can thus be accurately identified by judging the changes in the phase voltages.

In some embodiments, the motor sampling parameters include a temperature of each phase of winding of the motor; and said determining motor faulty phases according to the motor sampling parameters includes:
determining, if there is a temperature exceeding a first preset temperature interval, a phase corresponding to the temperature exceeding the first preset temperature interval as a motor faulty phase.

In this embodiment, considering that when a winding inter-turn short-circuit occurs in the winding of a phase of the motor, the temperature of the inter-turn short-circuited windings gradually increases, the motor faulty phases can thus be accurately identified from the changes in the winding temperatures.

In some embodiments, the motor sampling parameters include a temperature of each primary power device connected to the motor; and said determining motor faulty phases according to the motor sampling parameters includes:
determining, if there is a primary power device the temperature of which exceeds a second preset temperature interval, a phase corresponding to the primary power device the temperature of which exceeds the second preset temperature interval as a motor faulty phase.

In this embodiment, a faulty primary power device is determined from the changes in the temperatures of the primary power devices. When a short-circuit or broken-circuit fault occurs in the primary power device, the motor will also not work properly, and thus by identifying the faulty primary power device and subsequently performing switching from the faulty primary power device to a standby power device, damage to the motor by the faulty primary power device can be avoided.

In some embodiments, said controlling the motor faulty phases to switch from currently connected primary power devices to the standby power device includes:
controlling the currently connected primary power devices for the motor faulty phases to be turned off; and
controlling standby power devices the number of which is the same as the number of faulty phases out of the at least one standby power device to be turned on.

In this embodiment, the motor faulty phases are turned off and standby power devices the number of which is the same as the number of faulty phases are controlled to be turned on, thereby replacing the primary power devices corresponding to the motor faulty phases with standby power devices. In this way, the motor can continue to operate after it is faulty, and there is no safety risk due to the motor faulty phase during the operating process. Moreover, continued operation will not increase the degree of damage to the motor and will not shorten the life of the motor.

In some embodiments, after said controlling the motor faulty phases to switch from currently connected primary power devices to the standby power device, the method further includes:
continuing, if the number of remaining motor phases other than the motor faulty phases is larger than a preset number and there are unenabled standby power devices in the at least one standby power device, to detect whether new motor faulty phases appear in the remaining motor phases; and
switching, if the number of the new motor faulty phases is smaller than or equal to the number of the unenabled standby power devices, from primary power devices connected to the new motor faulty phases to the unenabled standby power devices.

In this embodiment, until the number of motor phases that are not faulty is less than the minimum number of motor phases allowed for the motor to be able to operate, motor faulty phases that are faulty are all switched to standby power devices, so that the time in which the motor can continue to operate after the occurrence of a fault can be maximized.

In some embodiments, the method further includes:
collecting operating parameters of an enabled standby power device and determining whether the enabled standby power device is faulty according to the operating parameters;
if it is determined that the enabled standby power device is faulty and there is currently an unenabled standby power device, turning off the faulty standby power device and controlling the unenabled standby power device to be turned on; and
controlling the motor to shut down if it is determined that the enabled standby power device is faulty and all standby power devices are enabled.

This embodiment enables timely switching to an unenabled standby power device in the event that an enabled standby power device is also faulty, thereby ensuring that the motor can continue to operate smoothly and thus avoiding damage to the motor by the faulty standby power device. If it is determined that the enabled standby power device is faulty and all standby power devices are enabled, the motor is controlled to shut down, thereby avoiding possible damage to the devices resulting from continued operation of the motor, and avoiding safety issues resulting from continued operation of the motor.

In some embodiments, before said controlling the motor faulty phases to switch from currently connected primary power devices to the standby power device, the method further includes:
controlling the motor to shut down.

In this embodiment, the motor is first controlled to shut down, and then switching from the currently connected primary power devices for the motor faulty phases to standby power devices is performed, which enables preventing the motor from still operating in a faulty state before the switching is completed, and reduces the possibility of further damage to the motor. Moreover, during the switching process, the current or voltage may change abruptly, and controlling the motor to stop before switching can effectively prevent the occurrence of damage to the motor resulting from the abrupt change in the current or voltage, thus improving the safety of the motor.

In some embodiments, the method further includes:
controlling the motor to shut down when the number of faulty phases is larger than the number of the standby power devices.

This embodiment avoids a higher degree of damage resulting from continued operation of the motor and avoids safety issues resulting from operation of the motor under a fault when the number of faulty phases is larger than the number of standby power devices.

In some embodiments, the number of phases of the motor is larger than or equal to 3; and the number of the standby power devices is larger than or equal to 1 and smaller than or equal to the number of phases of the motor minus 2.

It is usually necessary to have 2 or more normal phases in a multi-phase motor for it to operate, so the number of phases in the motor is limited to be larger than or equal to 3. The number of standby power devices may be set to any value between 1 and the number of phases of the motor minus 2, and the larger the number of standby power devices provided within that range, the longer the motor can be kept operating by the fault-tolerant control of the present application after a fault.

In a second aspect, the present application provides a motor control apparatus, where a neutral wire of a motor is connected to at least one standby power device, the apparatus including:
a faulty phase determination module for determining motor faulty phases if it is detected in an operating process of the motor that the motor is faulty; and
a faulty phase switching module for controlling the motor faulty phases to switch from currently connected primary power devices to the standby power device.

In a third aspect, the present application provides a motor control device including a power supply module, a motor, an inversion module, a control module, and at least one standby power device, where
the power supply module, the inversion module, and each standby power device are connected in parallel;
windings of the motor are connected in one-to-one correspondence with primary power devices in the inversion module;
the at least one standby power device is all connected to a neutral wire of the motor; and
the control module is used for determining motor faulty phases if it is detected in an operating process of the motor that the motor is faulty; and controlling the motor faulty phases to switch from currently connected primary power devices to the standby power device.

In a fourth aspect, the present application provides an electrical device including a memory, a processor, and a computer program stored on the memory and runnable on the processor, where the processor runs the computer program to implement a method as described in the first aspect.

In a fifth aspect, the present application provides a computer-readable storage medium having a computer program stored thereon, where the program is executed by a processor to implement a method as described in the first aspect.

The above description is only an overview of the technical solution of the present application. In order to better understand the technical means of the present application and thus implement them according to the contents of the specification, and in order to make the above and other objectives, features and advantages of the present application more obvious and understandable, the following is the detailed description of the present application.

### DESCRIPTION OF DRAWINGS

By reading the detailed description of the preferred implementations below, various other advantages and benefits will become apparent to those of ordinary skill in the art. The drawings are for the purpose of illustrating the preferred implementations only and are not to be considered a limitation to the present application. Moreover, in all of the drawings, the same components are indicated by the same reference numerals. In the accompanying drawings:
FIG. 1 illustrates a structural schematic diagram of a motor control device provided in an embodiment of the present application;
FIG. 2 illustrates a schematic diagram of a circuit structure of a motor control device provided in an embodiment of the present application;
FIG. 3 illustrates a flowchart of a motor control method provided in an embodiment of the present application;
FIG. 4 illustrates another flowchart of a motor control method provided in an embodiment of the present application;
FIG. 5 illustrates a schematic flowchart of motor control in the event of a short-circuit or broken-circuit fault of a motor provided in an embodiment of the present application;
FIG. 6 illustrates a schematic flowchart of motor control in the event of a fault of a primary power device in a motor inverter provided in an embodiment of the present application;
FIG. 7 illustrates a structural schematic diagram of a motor control apparatus provided in an embodiment of the present application;
FIG. 8 illustrates a structural schematic diagram of an electrical device provided in an embodiment of the present application; and
FIG. 9 illustrates a schematic diagram of a storage medium provided in an embodiment of the present application.

### DETAILED DESCRIPTION

Embodiments of the technical solutions of the present application will be described in detail below with reference to the accompanying drawings. The following embodiments are only used to more clearly illustrate the technical solution of the present application, and therefore are only used as examples and cannot be used to limit the scope of protection of the present application.

Unless otherwise defined, all technical and scientific terms used herein have the same meanings as those commonly understood by those skilled in the art to which the present application pertains to. the terms used herein are for the purpose of describing specific embodiments only, and are not intended to limit the present application. The terms "including" and "having" and any variations thereof in the description and claims of the present application and the aforementioned description of the drawings are intended to cover non-exclusive inclusion.

In the description of the embodiments of the present application, the technical terms "first", "second", and the like are used only to distinguish between different objects, and are not to be understood as indicating or implying a relative importance or implicitly specifying the number, particular order, or primary and secondary relation of the technical features indicated. In the description of the embodiments of the present application, the meaning of "a plurality of" is two or more, unless otherwise explicitly and specifically defined.

Reference herein to "an embodiment" means that a particular feature, structure, or characteristic described in connection with the embodiment can be included in at least one embodiment of the present application. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

In the description of the embodiments of the present application, the term "and/or" is simply a description of an association of associated objects, which indicates that there may exist three relationships, for example, A and/or B may represent three situations: A exists alone, both A and B exist, and B exists alone. Moreover, the character "/" herein generally indicates that the context objects are in an "or" relationship.

In the description of the embodiments of the present application, the term "a plurality of" refers to two or more (including two). Similarly, "multiple groups" refers to two or more groups (including two groups), and "multiple pieces" refers to two or more pieces (including two pieces).

In the description of the embodiments of the present application, the orientation or positional relationships indicated by the technical terms "center", "longitudinal", "transverse", "length", "width", "thickness", "upper", "lower", "front", "back", "left", "right", "vertical", "horizontal", "top", "bottom", "inner", "outer", "clockwise", "counterclockwise", "axial", "radial", "circumferential", etc. are based on the orientation or positional relationships shown in the accompanying drawings, and are only for convenience of description of the present application and simplification of the description, rather than indicating or implying that the indicated device or element must have a specific orientation, be constructed and operate in a specific orientation, and therefore, cannot be understood as a limitation to the present application.

In the description of the embodiments of the present application, unless otherwise specified and limited, the technical terms "mounting", "connection", "connection" and "fixation" should be understood in a broad sense, for example, they can be fixed connection, detachable connection, or integration; or they can be mechanical connection or electrical connection; or they can be direct connection, indirect connection through an intermediate medium, or communication of the interiors of two elements or the relationship of interaction between two elements. For those of ordinary skill in the art, the specific meanings of the above terms in the embodiments of the present application can be understood according to specific situations.

At present, from the perspective of the development of the market situation, power batteries are increasingly more widely used. Power batteries are not only applied in energy storage power source systems such as water, fire, wind and solar power stations, but also widely applied in electric transport tools, such as electric bicycles, electric motorcycles, and electric vehicles, as well as many fields, such as military equipment and aerospace. In the fields of electric transportation supply, military equipment, aerospace, and others, power is usually provided by means of power batteries, specifically by means of an electric motor converting the electrical energy of the power battery into mechanical energy so as to drive the operation of the electrical device.

The inventors of the present invention note that faults may occur during the operating process of the motor. For example, a short-circuit or broken-circuit fault occurs in one or more phases of windings of the motor, or a short-circuit or broken-circuit fault occurs in one or more power devices in the motor inverter, and so forth. When a motor is faulty, it may cause the motor to shut down directly, and even if the motor can still run, continuing to run in a faulty state will increase the degree of damage to the motor and shorten the life of the motor, and continuing to run in a faulty state will also bring a great safety risk to the user. Therefore, it is necessary to take certain measures to deal with the fault when the motor is faulty.

The inventors have found through reviewing the information that there exist some schemes for fault-tolerant control of motor faults in the related technology. In these existing schemes, usually after a motor is faulty, some fault-tolerant control software algorithms are used to adjust the current or torque and other operating parameters of the motor, so as to achieve the purpose that the motor continues to operate safely even under the faulty state. However, the inventors found through research that the software algorithms inevitably lead to computational errors, which cause the precision of the control of the faulty motor by adjusting the operating parameters of the motor through the software algorithm to be not high, so the problem has not been solved fundamentally, and the continued operation of the motor after the adjustment will still increase the degree of damage to the motor, and there is still a certain degree of safety risk.

On this basis, the inventors improve the structure of the circuit in which the motor is located in the existing electrical device and leads-out a neutral wire from the neutral point where all the windings of the motor are connected, through which neutral wire at least one standby power device is connected. For ease of differentiation, the present application calls each power device in the motor inverter as a primary power device. Each standby power device performs the same function as each primary power device in the motor inverter. Each standby power device is connected in parallel with the power battery as well as each primary power device in the motor inverter.

Based on the above improvement to the circuit structure of the motor, the inventors have designed a motor control method, which determines motor faulty phases if it is detected in an operating process of the motor that the motor is faulty; and controls the motor faulty phases to switch from currently connected primary power devices to the standby power device.

Thus, the primary power devices connected to the motor faulty phases are turned off and the standby power devices are controlled to be turned on, thereby replacing the primary power devices corresponding to the motor faulty phases with standby power devices. In this way, the motor can continue to operate after it is faulty, and there is no safety risk due to the motor faulty phase during the operating process. Moreover, continued operation will not increase the degree of damage to the motor and will not shorten the life of the motor.

The motor control method disclosed in embodiments of the present application may be used for, but is not limited to, fault-tolerant control of three-phase motors, four-phase motors, five-phase motors, six-phase motors, or other more-phase motors.

Electrical apparatuses in which the motor control method provided in embodiments of the present application can be applied to, but are not limited to, electric toys, electric tools, battery vehicles, electric cars, ships, spacecraft, and the like, provided with power batteries and motors. Among them, the electric toy may include a stationary or mobile electric toy, for example, a game console, an electric car toy, an electric ship toy, and an electric aircraft toy, and the like, and the spacecraft may include an aircraft, a rocket, a space shuttle and a spaceship, and the like.

The circuit structure in which the motor is located in these electrical apparatuses can be improved as described above, and the motor control method disclosed in embodiments of the present application can be applied to perform fault-tolerant control of the motor. In this way, in the event of a fault of the motor, it is possible to continue safe operation of the motor by switching to standby power devices without hindering the normal use of the electrical apparatus or increasing the degree of damage to the motor.

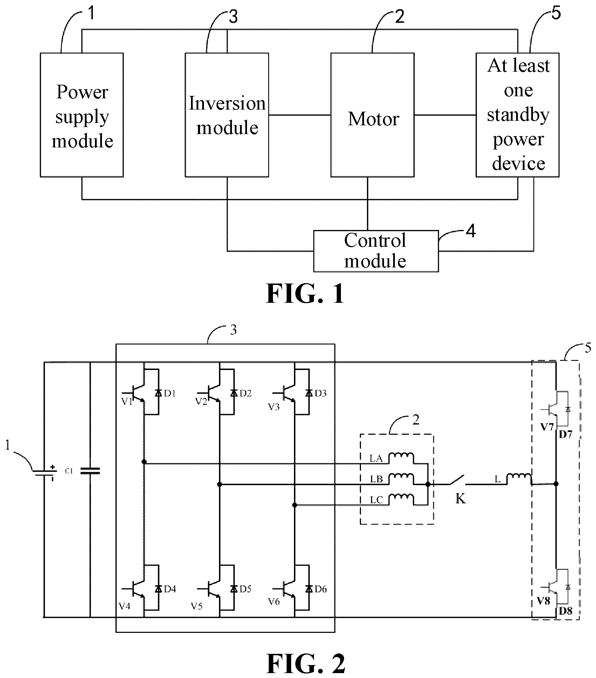

Embodiments of the present application provide a motor control device. As shown in FIG. 1, the device includes: a power supply module 1, a motor 2, an inversion module 3, a control module 4, and at least one standby power device 5.

Among them, the power supply module 1, the inversion module 3, and each standby power device 5 are connected in parallel. The windings of the motor 2 are connected in one-to-one correspondence with primary power devices 6 in the inversion module 3. The at least one standby power device 5 is all connected to a neutral wire of the motor 2.

The control module 4 is connected to the motor 2, the inversion module 3, and each standby power device 5. The control module 4 is used for determining motor faulty phases and a number of faulty phases if it is detected in an operating process of the motor 2 that the motor 2 is faulty; and controlling the motor faulty phases to switch from currently connected primary power devices 6 to the standby power device 5 when the number of faulty phases is smaller than or equal to a number of the standby power devices 5.

The above power supply module 1 can be a power battery, and the power battery can be a ternary power battery, a lithium iron phosphate battery, a lithium titanate battery, a lead-acid storage battery, and so on. The inversion module 3 is an inverter corresponding to the motor 2, and the number of windings of the motor 2 is equal to the number of the primary power devices 6 in the inversion module 3. The motor 2 may be a three-phase motor, a four-phase motor, or a six-phase motor, or the like. The neutral wire of the motor 2 is the wire leading out from the connection point where all windings of the motor 2 are connected.

The control module 4 may include a motor control unit (MCU) and/or a vehicle control unit (VCU), or, alternatively, the control module 4 may be a domain control unit.

The structure and the specifications of the standby power device 5 may be the same as the structure and the specifications of the primary power device 6 in the inversion module 3. Both the standby power device 5 and the primary power device 6 may be realized using bridge arm switches of insulated gate bipolar transistors (IGBTs). As one example, the standby power device 5 may include two power transistors connected in series, the power transistors including a switch transistor and a flyback diode connected in parallel. As another example, the standby power device 5 may also include two switches connected in series, both of which may be switch transistors or relay switches.

Since the motor 2 includes multiple phases, the motor 2 can continue to operate after a number of motor phases that is less than a certain number of phases are faulty, where the certain number of phases can be at most the total number of phases of the motor 2 minus 2. In embodiments of the present application, the total number of phases of the motor 2 is larger than or equal to 3. For example, for a three-phase motor, operation can continue if one phase is faulty. For a four-phase motor, operation can continue if one or two phases are faulty. For a six-phase motor, operation can continue if one phase, two phases, three phases, or four phases are faulty.

In embodiments of the present application, at least one standby power device 5 is connected to the neutral wire of the motor 2, where the number of the standby power devices 5 may be any value between 1 and the total number of phases of the motor 2 minus 2. For example, for a three-phase motor, one standby power device 5 may be connected to the neutral wire of the three-phase motor. For a four-phase motor, one or two standby power devices 5 may be connected to the neutral wire of the four-phase motor. For a six-phase motor, one, two, three or four standby power devices 5 may be connected to the neutral wire of the six-phase motor.

FIG. 2 illustrates a schematic diagram of a circuit in which one standby power device 5 is provided in a three-phase motor. In FIG. 2, the standby power device 5 and three primary power devices in the inversion module 3 are each realized by using a bridge arm consisting of two power transistors connected in series. As shown in FIG. 2, there may be a switch and/or an energy storage device connected between the motor and each standby power device, where the energy storage device may be an inductor or a capacitor.

By entering a fault-tolerant mode when a motor fault is detected through the control module 4, the motor faulty phases are controlled to switch from the connected primary power devices 6 to the standby power device 5, thereby replacing the primary power devices 6 corresponding to the motor faulty phases with the standby power device 5, so that the motor 2 can continue to operate after it is faulty, and there is no safety risk due to the motor faulty phase during the operating process, thereby ensuring that the motor control device can be operated in a safe and stable manner. Moreover, continued operation will not increase the degree of damage to the motor 2 and will not shorten the life of the motor 2.

Some other embodiments of the present application provide a motor control method, which is applied to the motor control device proposed in the above embodiments. As shown in FIG. 1, a neutral wire of a motor is connected to at least one standby power device. The number of phases of the motor is larger than or equal to 3, and the number of the standby power devices is larger than or equal to 1 and smaller than or equal to the number of phases of the motor minus 2.

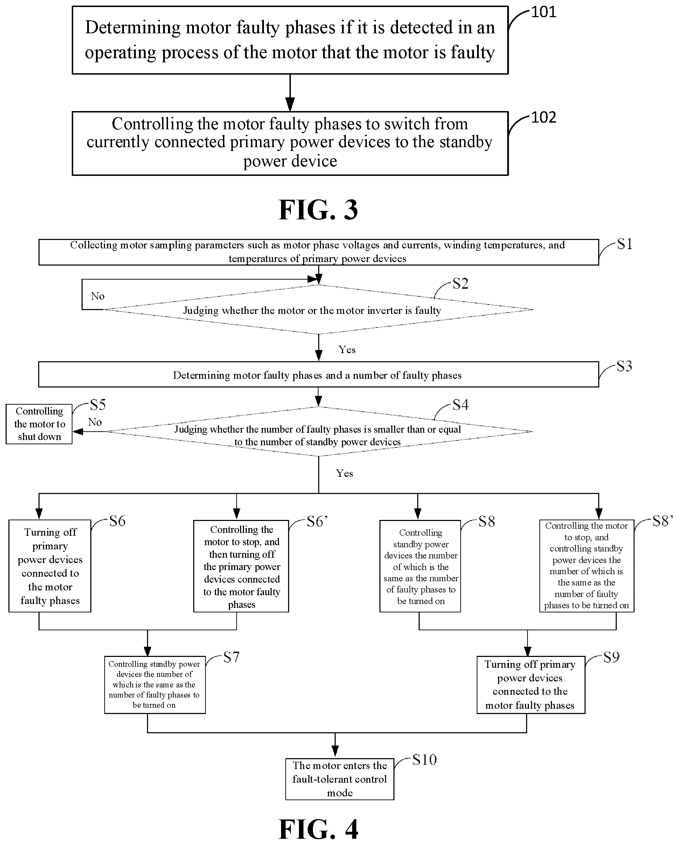

FIG. 3 illustrates a flowchart of a motor control method. The method specifically includes the following steps:
Step 101: determining motor faulty phases if it is detected in an operating process of the motor that the motor is faulty.

In an embodiment of the present application, each phase of winding of the motor as well as each primary power device in the motor inverter may be provided with collection means for collecting motor sampling parameters, where the motor sampling parameters include at least one of a phase current and a phase voltage of each phase of the motor, a temperature of each phase of winding, or a temperature of each primary power device, and other data. The collection means includes a temperature sensor, a current sensor, a voltage sensor, and the like. For example, a temperature sensor, a current sensor or a voltage sensor may be mounted at each phase of winding of the motor, and a temperature sensor, a current sensor or a voltage sensor may be mounted at each power transistor in each primary power device. In addition, the collection of the phase current and the phase voltage can also be performed by a current sampling circuit for collecting the current and a voltage sampling circuit for collecting the voltage, respectively.

The motor sampling parameters are collected in real time during the operating process of the motor, and based on the motor sampling parameters, it can be determined whether the motor is faulty or not.

Specifically, the control module judges whether the temperatures of the windings of the phases among the motor sampling parameters are higher than a first preset temperature interval threshold, and determines that the motor is faulty if there exists a winding with a temperature higher than the first preset temperature interval threshold.

The control module judges whether the temperatures corresponding to the primary power devices among the motor sampling parameters are higher than a second preset temperature interval threshold, and determines that the motor is faulty if there exists a primary power device with a temperature higher than the second preset temperature interval threshold.

The control module judges whether the fluctuations of the phase currents of the phases among the motor sampling parameters are abnormal. The control module may be pre-configured with fluctuation data for the phase currents of the phases in the normal operating state of the motor without faults, where the fluctuation data may be a table of mapping relationships between phase currents and time, or a current curve of the phase currents over time, or the like. The control module compares the phase currents of the phases that are collected in real time with the preset fluctuation data of the phase currents of the phases, respectively, and if it is determined that there exists a phase current with a fluctuation situation that is inconsistent with the preset fluctuation data, it is determined that there is a fault in the motor.

The control module judges whether the fluctuations of the phase voltages of the phases among the motor sampling parameters are abnormal. The control module may be pre-configured with fluctuation data for the phase voltages of the phases in the normal operating state of the motor without faults, where the fluctuation data may be a table of mapping relationships between phase voltages and time, or a voltage curve of the phase voltages over time, or the like. The control module compares the phase voltages of the phases that are collected in real time with the preset fluctuation data of the phase voltages of the phases, respectively, and if it is determined that there exists a phase voltage with a fluctuation situation that is inconsistent with the preset fluctuation data, it is determined that there is a fault in the motor.

During the operating process of the motor, if the control module determines that the motor is faulty by one or more of the above ways of judging whether the motor is faulty, it further determines motor faulty phases that are faulty.

The control module determines motor faulty phases according to the motor sampling parameters. The motor faulty phases are determined based on the motor sampling parameters, where the motor sampling parameters are operating parameters of the motor that are collected in real time in the operating process of the motor, which can accurately reflect the operating condition of the motor, so that the motor phases that are faulty can be accurately determined based on the motor sampling parameters, and the accuracy of determining the motor faulty phases in this way is very high.

In one implementation, the motor sampling parameters include a phase current of each phase of the motor. Due to the occurrence of a short-circuit in a phase, the impedance of that short-circuited phase decreases and approaches 0, and thus the phase current of that short-circuited phase will be very high. The control module judges whether the phase current of each phase is higher than a preset current threshold, which may be the maximum value of the phase current that can be achieved without a short-circuit. If it is determined that there is a phase current higher than the preset current threshold, a phase to which the phase current higher than the preset current threshold belongs is determined as a motor faulty phase. The motor faulty phase that is short-circuited can be accurately identified based on the changes in the phase currents.

**In** another implementation, the motor sampling parameters include a phase current of each phase of the motor. When a short-circuit occurs in a phase, the impedance of that short-circuited phase is reduced by a lot compared to a phase that is not short-circuited, resulting in the phase current of the short-circuited phase being much higher than that of other phases. The control module separately calculates a difference absolute value between phase currents of any two phases. It judges whether each difference absolute value calculated is larger than a preset difference threshold, and if it is determined that there is a difference absolute value larger than the preset difference threshold, a phase with the highest phase current out of two phases corresponding to the difference absolute value larger than the preset difference threshold is determined as a motor faulty phase. The motor faulty phase in which a short-circuit occurs can be accurately identified based on the changes in the relative magnitudes of the phase currents.

When there is a broken-circuit in a phase of the motor, the resistance of that broken-circuited phase is very high and there is almost no current passing through it, which will increase the current in the other normal motor phases. Therefore, if the control module detects that the phase current of a phase is lower than a certain threshold, while the other phase currents become high, where that certain threshold can be a value close to 0, the phase corresponding to the phase current lower than the certain threshold is determined as a motor faulty phase. The motor faulty phase in which a broken-circuit occurs can be accurately identified based on the changes in the current currents of the phases.

When an inter-turn short-circuit occurs in the winding of a phase of the motor, the resistance of the winding decreases, which causes the phase current flowing through the winding to become higher, so the control module determines that the phase current of a certain phase of winding becomes higher by detecting the changes in the magnitudes of the phase current flowing through the winding, then that phase can be determined as a motor faulty phase. Based on the changes in the magnitudes of the phase currents flowing through the windings, a motor faulty phase with a winding inter-turn short-circuits can be accurately identified.

In another implementation, the motor sampling parameters include a phase voltage of each phase of the motor. When a short-circuit occurs in a phase of the motor, the resistance of the short-circuited phase tends to approach zero, which is equivalent to a wire, and at this time, the phase voltage corresponding to the short-circuited phase becomes very low and the phase voltage tends to approach zero, whereas if a broken-circuit occurs in a phase of the motor, the resistance of the broken-circuited phase is very large and there is almost no current passing through the broken-circuited phase, and at this time, the voltage of the broken-circuited phase becomes very high, According to the phase voltage of each phase, the control module monitor in real time whether there is voltage change abnormality in the phase voltage of each phase, and if it detects that the phase voltage of a phase suddenly becomes low, or the phase voltage of a phase suddenly becomes high, the phase corresponding to the phase voltage that has changed abnormally will be determined as a motor faulty phase. A motor faulty phase in which a short-circuit or a broken-circuit occurs can be accurately identified based on the changes in the phase voltages.

In some other embodiments, the motor sampling parameters include a temperature of each phase of winding of the motor. When a winding inter-turn short-circuits occurs in the winding of a phase of the motor, the temperature of the inter-turn short-circuited winding gradually increases over time. Therefore, the temperature of the winding can be detected by a temperature sensor provided on the winding, and the motor faulty phase can be identified based on the changes in winding temperatures.

Specifically, the control module is pre-configured with a first preset temperature interval, where an upper limit value of the first preset temperature interval may be the maximum temperature that can be reached by the windings during normal operation, and a lower limit value may be an average temperature of the phases of windings when the phases of windings operate normally. The control module judges whether the temperature of each phase of winding exceeds the first preset temperature interval, and if it is determined that there is a temperature exceeding the first preset temperature interval, a phase corresponding to the temperature exceeding the first preset temperature interval is determined as a motor faulty phase.

Based on the changes in the winding temperatures, a motor faulty phase in which a weak short-circuit situation such as a winding inter-turn short-circuits occurs can be accurately identified.

In some other embodiments of the present application, the inverter of the motor includes a plurality of primary power devices, and each phase of winding of the motor is connected in one-to-one correspondence with the primary power devices of the inverter. When a short-circuit or broken-circuit fault occurs in a primary power device, the motor also cannot operate normally, so real-time monitoring of each primary power device is also required. A temperature sensor can be provided at each primary power device to collect the temperature of each primary power device. The motor sampling parameters thus include the temperature of each primary power device.

The control module is pre-configured with a second preset temperature interval, where an upper limit value of the second preset temperature interval may be the maximum temperature that may be reached by the primary power devices during normal operation, and a lower limit value may be the average temperature of the primary power devices during normal operation or the lowest temperature during normal operation. The control module judges whether the temperature of each primary power device exceeds the second preset temperature interval. If it is determined that there is a primary power device the temperature of which exceeds the second preset temperature interval, a phase corresponding to the primary power device exceeding the second preset temperature interval is determined as a motor faulty phase.

Based on the changes in the temperatures of the primary power devices, the primary power device in which the fault occurs can be accurately identified, and thus the corresponding motor faulty phase can be determined.

The above implementations of determining the motor faulty phase are only for example, and in actual applications, the motor faulty phase can also be determined by other means based on the motor sampling parameters, as long as the motor faulty phase can be determined, and the embodiments of the present application do not impose any special limitations on the specific means of determining the motor faulty phase.

In embodiments of the present application, the control module monitors whether the motor is faulty in real time based on the motor sampling parameters, and determines specific motor faulty phases based on the motor sampling parameters after determining that the motor is faulty.

Step 102: controlling the motor faulty phases to switch from currently connected primary power devices to the standby power device.

After obtaining the specific motor faulty phases by means of step 101, the control module switches from the currently connected primary power devices for the motor faulty phases to the standby power device.

Specifically, the currently connected primary power devices for the motor faulty phases are controlled to be turned off. Standby power devices in the at least one standby power device are controlled to be turned on. The number of the standby power devices that are turned on may be equal to the number of the primary power devices corresponding to the motor faulty phases.

For example, for a six-phase motor, assuming that 4 standby power devices are currently provided in the circuit, then the primary power devices connected to 2 motor faulty phases are turned off, and any 2 of the 4 standby power devices are controlled to be turned on.

In a three-phase motor as shown in FIG. 2, if one motor faulty phase is detected, for example, if the winding LA or a primary power device connected to the winding LA is detected to be faulty, where the fault of the primary power device connected to the winding LA may be a fault of the switch transistor V1 or V4 or the flyback diode D1 or D4, the switch transistors V1 and V4 may be controlled to be turned off, and the standby power device 5 may be enabled by controlling the switch transistor V7 to be turned on, or controlling the switch transistor V8 to be turned on.

The motor faulty phases are turned off and the standby power devices are controlled to be turned on, thereby replacing the primary power devices corresponding to the motor faulty phases with standby power devices. In this way, the motor can continue to operate after it is faulty, and there is no safety risk due to the motor faulty phases during the operating process. Moreover, continued operation will not increase the degree of damage to the motor and will not shorten the life of the motor.

In some other embodiments of the present application, after each specific motor faulty phase is determined by step 101, the number of motor faulty phases is also counted to obtain the number of faulty phases. The control module judges whether the number of faulty phases is smaller than or equal to the number of standby power devices provided in the current circuit structure. If it is determined that the number of faulty phases is smaller than or equal to the number of standby power devices, the operation of step 102 is performed to turn off the primary power device connected to the motor faulty phase, and to control standby power devices the number of which is the same as the number of faulty phases to be turned on.

After the motor is faulty, a number of faulty phases is determined, and when the number of faulty phases is smaller than or equal to a number of the standby power devices, switching from the primary power devices for the motor faulty phases to standby power devices the number of which is the same as the number of faulty phases is performed. By replacing primary power devices corresponding to all motor faulty phases with standby power devices, it is ensured that the motor can continue to operate safely after it is faulty. Moreover, continued operation will not increase the degree of damage to the motor and will not shorten the life of the motor.

In some other embodiments of the present application, the process of switching the motor faulty phases from the currently connected primary power devices to the standby power devices can be implemented in a variety of ways. In an example, the currently connected primary power devices for the motor faulty phases may be turned off first, and then standby power devices the number of which is the same as the number of faulty phases may be controlled to be turned on. Alternatively, standby power devices the number of which is the same as the number of faulty phases may be controlled to be turned on first, and then the currently connected primary power devices for the motor faulty phases may be turned off.

In another example, the motor may be controlled to shut down first, then the currently connected primary power devices for the motor faulty phases may be turned off, and finally standby power devices the number of which is the same as the number of faulty phases may be controlled to be turned on. Alternatively, the motor may be controlled to shut down first, then standby power devices the number of which is the same as the number of faulty phases may be controlled to be turned on, and finally the currently connected primary power devices for the motor faulty phases may be turned off.

The motor is first controlled to shut down, and then switching from the currently connected primary power devices for the motor faulty phases to standby power devices is performed, which enables preventing the motor from still operating in a faulty state before the switching is completed, and reduces the possibility of further damage to the motor. Moreover, during the switching process, the current or voltage may change abruptly, and controlling the motor to stop before switching can effectively prevent the occurrence of damage to the motor resulting from the abrupt change in the current or voltage, thus improving the safety of the motor.

In some other embodiments of the present application, after switching from the primary power devices connected to the motor faulty phases to the standby power devices, if the number of remaining motor phases other than the motor faulty phases is larger than a preset number and there is an unenabled standby power device in at least one standby power device, the motor sampling parameters of the remaining motor phases are still collected in real time, and these motor phases are monitored as to whether they are faulty based on the collected motor sampling parameters. The above preset number is the minimum number of motor phases allowed for the motor to operate.

When it is monitored that new motor faulty phase appear out of these motor phases, the new motor faulty phases are determined and the number of new faulty phases is counted. If the number of new faulty phases is smaller than or equal to the number of currently unenabled standby power devices, switching from primary power devices connected to the new motor faulty phases to unenabled standby power devices the number of which is the same as the number of new faulty phases is performed. If the number of new faulty phases is larger than the number of currently unenabled standby power devices, the motor is controlled to shut down.

For example, for a six-phase motor where 4 standby power devices are provided in the circuit, if 1 motor faulty phase is detected, the primary power device connected to that motor faulty phase is turned off and one standby power device is turned on. After that, the real-time monitoring of the remaining 5 phases in the six-phase motor that are not faulty is continued and, if another 2 phases are detected to be faulty, the primary power devices for these two phases are turned off and 2 standby power devices out of the remaining 3 unenabled standby power devices are turned on.

Until the number of motor phases that are not faulty is less than the minimum number of motor phases allowed for the motor to be able to operate, motor faulty phases that are faulty are all switched to standby power devices, so that the time in which the motor can continue to operate after the occurrence of a fault can be lengthened to the greatest extent.

In some other embodiments, after switching from the primary power devices connected to the motor faulty phases to the standby power devices, operating parameters of enabled standby power devices may also be collected, where the operating parameters may include, for example, temperatures, currents, or voltages of the enabled standby power devices. It is determined whether the enabled standby power device is faulty according to the collected operating parameters, and if it is determined that the enabled standby power device is faulty and there is currently an unenabled standby power device, the faulty standby power device is turned off and the unenabled standby power device is controlled to be turned on, which enables timely switching to an unenabled standby power device in the event that an enabled standby power device is also faulty, thereby ensuring that the motor can continue to operate smoothly and thus avoiding damage to the motor by the faulty standby power device.

If it is determined that the enabled standby power device is faulty and all standby power devices are enabled, the motor is controlled to shut down, thereby avoiding possible damage to the devices resulting from continued operation of the motor, and avoiding safety issues resulting from continued operation of the motor.

If the control module, after determining the number of faulty phases, judges that the number of faulty phases is larger than the number of standby power devices provided in the current circuit, it is not possible to replace the primary power devices for all motor faulty phases even if all standby power devices in the current circuit are enabled; therefore, the motor is controlled to shut down, so as to avoid a higher degree of damage resulting from the continued operation of the motor and to avoid safety issues resulting from operation of the motor under the fault.

In some other embodiments of the present application, the control module, after judging that the number of faulty phases is larger than the number of standby power devices, may also send a prompt message to the user, which is used to prompt the user that the motor is faulty and needs to be repaired before being used. Specifically, the control module may send the prompt message to a terminal of the user, such as a cell phone or a computer. Alternatively, the control module may display this prompt message on a display of the electrical device in which the motor is located. For example, if the electrical device is an electric car, the prompt message may be displayed in the car central control screen of the electric car.

In order to facilitate the understanding of the motor control process of the present application, it is described below in conjunction with the accompanying drawings. As shown in the schematic flowchart of motor control illustrated in FIG. 4, S1: collecting motor sampling parameters such as motor phase and line voltages and currents, winding temperatures, and temperatures of primary power devices. S2: judging whether the motor or the motor inverter is faulty, and if not, continuing with step S2; and if yes, performing step S3. S3: determining motor faulty phases and a number of faulty phases. S4: judging whether the number of faulty phases is smaller than or equal to the number of standby power devices, and if not, performing step S5; and if yes, performing any of steps S6, S6', S8 or S8'. S5: controlling the motor to shut down. S6: turning off primary power devices connected to the motor faulty phases, and then performing step S7. S6': controlling the motor to stop, then turning off the primary power devices connected to the motor faulty phases, and then performing step S7. S7: controlling standby power devices the number of which is the same as the number of faulty phases to be turned on, and then performing step S10. S8: controlling standby power devices the number of which is the same as the number of faulty phases to be turned on, and then performing step S9. S8': controlling the motor to stop, controlling standby power devices the number of which is the same as the number of faulty phases to be turned on, and then performing step S9. S9: turning off primary power devices connected to the motor faulty phases, and then performing step S10. S10: the motor enters the fault-tolerant control mode.

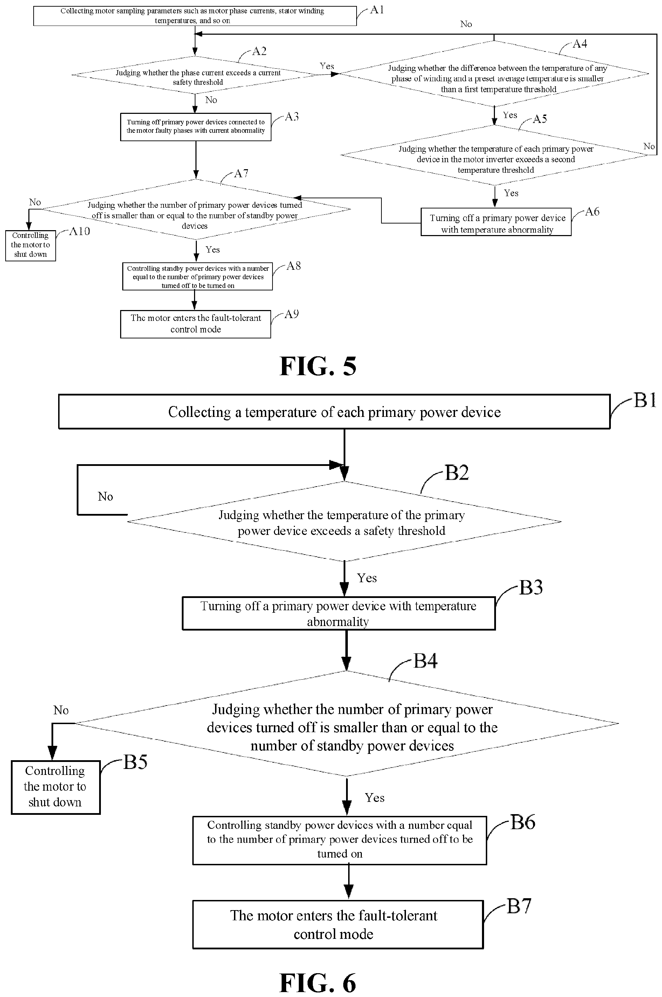

FIG. 5 illustrates a schematic flowchart of fault-tolerant control when the motor is short-circuited or broken-circuited. As shown in FIG. 5, A1: collecting motor sampling parameters such as motor phase and line voltages, stator winding temperatures, and so on. A2: judging whether the phase current exceeds a current safety threshold, if yes, performing step A3, and if not, performing step A4. A3: turning off primary power devices connected to the motor faulty phases with current abnormality and performing step A7. A4: judging whether the difference between the temperature of any phase of winding and a preset average temperature is smaller than a first temperature threshold, if not, returning to step A2, and if yes, performing step A5. A5: judging whether the temperature of each primary power device in the motor inverter exceeds a second temperature threshold, if not, returning to step A2, and if yes, performing step A6. A6: turning off a primary power device with temperature abnormality. A7: judging whether the number of primary power devices turned off is smaller than or equal to the number of standby power devices, if yes, performing step A8, and if not, performing step A10. A8: controlling standby power devices with a number equal to the number of primary power devices turned off. A9: the motor enters the fault-tolerant control mode. A10: controlling the motor to shut down.

FIG. 6 illustrates a schematic flowchart of fault-tolerant control in the event of a fault in a primary power device in a motor inverter. B1: collecting a temperature of each primary power device. B2: judging whether the temperature of the primary power device exceeds a safety threshold, if not, continuing to perform step B2, and if yes, performing step B3. B3: turning off a primary power device with temperature abnormality. B4: judging whether the number of primary power devices turned off is smaller than or equal to the number of standby power devices, if not, performing step B5, and if yes, performing step B6. B5: controlling the motor to shut down. B6: controlling standby power devices with a number equal to the number of primary power devices turned off to be turned on. B7: the motor enters the fault-tolerant control mode.

The fault-tolerant control mode in FIGS. 4-6 as described above is an operating mode of switching to standby power devices to continue operation after a motor faulty phase has occurred.

**In** an embodiment of the present application, after it is determined that the motor is faulty, motor faulty phases and the number of faulty phases are judged, and when the number of faulty phases is smaller than or equal to the number of standby power devices, primary power devices for the motor faulty phases are turned off, and standby power devices the number of which is the same as the number of faulty phases are controlled to be turned on. By replacing the primary power devices corresponding to the motor faulty phases with standby power devices, the motor can continue to operate after it is faulty, and there is no safety risk due to the motor faulty phases during the operating process. Moreover, continued operation will not increase the degree of damage to the motor and will not shorten the life of the motor.

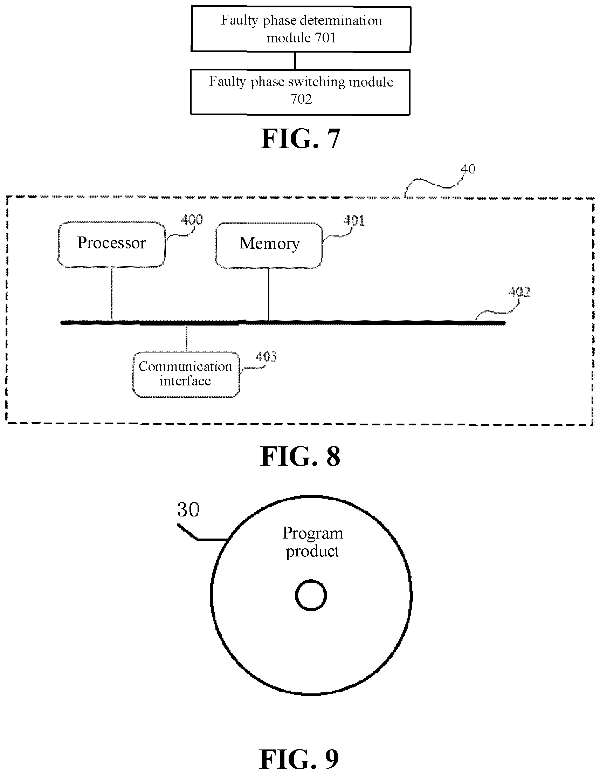

Some other embodiments of the present application provide a motor control apparatus for performing the motor control method provided in any of the above embodiments, with reference to FIG. 7, the apparatus including:
a faulty phase determination module 701 for determining motor faulty phases if it is detected in an operating process of the motor that the motor is faulty; and
a faulty phase switching module 702 for controlling the motor faulty phases to switch from currently connected primary power devices to the standby power device.

The faulty phase switching module 702 is further used for determining a number of faulty phases of the motor; and performing, when the number of faulty phases is smaller than or equal to a number of the standby power devices, the operation of controlling the motor faulty phases to switch from currently connected primary power devices to the standby power devices.

The faulty phase determination module 701 is used for acquiring motor sampling parameters for the operating process of the motor; and determining motor faulty phases according to the motor sampling parameters.

In some embodiments, the motor sampling parameters include at least one of a phase current and a phase voltage of each phase of the motor, a temperature of each phase of winding, and a temperature of each primary power device connected to the motor.

In some embodiments, the motor sampling parameters include a phase current of each phase of the motor; and the faulty phase determination module 701 is used for determining, if there is a phase current higher than a preset current threshold, a phase to which the phase current higher than the preset current threshold belongs as a motor faulty phase.

In some embodiments, the motor sampling parameters include a phase current of each phase of the motor; and the faulty phase determination module 701 is used for separately calculating a difference absolute value between phase currents of any two phases; and determining, if there is a difference absolute value larger than a preset difference threshold, a phase with the highest phase current out of two phases corresponding to the difference absolute value larger than the preset difference threshold as a motor faulty phase.

In some embodiments, the motor sampling parameters include a phase voltage of each phase of the motor; and the faulty phase determination module 701 is used for determining, if there is a phase voltage with voltage change abnormality, a phase corresponding to the phase voltage with change abnormality as a motor faulty phase.

In some embodiments, the motor sampling parameters include a temperature of each phase of winding of the motor; and the faulty phase determination module 701 is used for determining, if there is a temperature exceeding a first preset temperature interval, a phase corresponding to the temperature exceeding the first preset temperature interval as a motor faulty phase.

In some embodiments, the motor sampling parameters include a temperature of each primary power device connected to the motor; and the faulty phase determination module 701 is used for determining, if there is a primary power device the temperature of which exceeds a second preset temperature interval, a phase corresponding to the primary power device the temperature of which exceeds the second preset temperature interval as a motor faulty phase.

The faulty phase switching module 702 is used for controlling the currently connected primary power devices for the motor faulty phases to be turned off; and controlling standby power devices the number of which is the same as the number of faulty phases out of the at least one standby power device to be turned on.

The faulty phase determination module 701 is further used for continuing, if the number of remaining motor phases other than the motor faulty phase is larger than a preset number and there are unenabled standby power devices in the at least one standby power device, to detect whether new motor faulty phases appear in the remaining motor phases; and
the faulty phase switching module 702 is further used for switching, if the number of the new motor faulty phases is smaller than or equal to the number of the unenabled standby power devices, from primary power devices connected to the new motor faulty phases to the unenabled standby power devices.

The apparatus further includes: a standby power device monitoring module for collecting operating parameters of an enabled standby power device and determining whether the enabled standby power device is faulty according to the operating parameters; if it is determined that the enabled standby power device is faulty and there is currently an unenabled standby power device, turning off the faulty standby power device and controlling the unenabled standby power device to be turned on; and controlling the motor to shut down if it is determined that the enabled standby power device is faulty and all standby power devices are enabled.

The faulty phase switching module 702 is further used for controlling the motor to shut down before controlling the motor faulty phases to switch from currently connected primary power devices to the standby power device.

The faulty phase switching module 702 is further used for controlling the motor to shut down when the number of faulty phases is larger than the number of standby power devices.

In some embodiments, the number of phases of the motor is larger than or equal to 3; and the number of the standby power devices is larger than or equal to 1 and smaller than or equal to the number of phases of the motor minus 2.

The motor control apparatus provided in the above embodiments of the present application is motivated by the same inventive concept as the motor control method provided in the embodiments of the present application, and has the same beneficial effect as the method employed, operated, or realized by the application stored therein.

An implementation of the present application further provides an electrical device to perform the motor control method described above. The electrical device may be an electric vehicle, an electric toy, a ship, a spacecraft, or the like that is provided with a power battery, a motor, and a motor inverter. With reference to FIG. 8, it illustrates a schematic diagram of an electrical device provided in some embodiments of the present application. As shown in FIG. 8, an electrical device 40 includes: a processor 400, a memory 401, a bus 402, and a communication interface 403, where the processor 400, the communication interface 403, and the memory 401 are connected via the bus 402; and the memory 401 stores a computer program that is runnable on the processor 400, and the processor 400, when running the computer program, executes the motor control method provided in any one of the preceding implementations of the present application.

Among them, the memory 401 may include a high-speed random access memory (RAM), and may also include a non-volatile memory, such as at least one disk memory. The communication connection between this apparatus network element and at least one other network element is implemented through at least one communication interface 403 (which may be wired or wireless), which may use the Internet, a wide area network, a local network, a metropolitan area network, and the like.

The bus 402 may be an ISA bus, a PCI bus, or an EISA bus, and so on. Buses may be classified as address buses, data buses, control buses, and so on. Among them, the memory 401 is used to store a program, and the processor 400 executes the program after receiving an execution instruction, and the motor control method disclosed in any one of the foregoing implementations of embodiments of the present application may be applied in the processor 400, or implemented by the processor 400.

The processor 400 may be an integrated circuit chip with processing capabilities for signals. During implementation, the steps of the method described above may be accomplished by integrated logic circuitry in hardware in processor 400 or by instructions in the form of software. The processor 400 described above may be a general purpose processor, which includes a central processing unit (CPU), a network processor (NP), and the like; and it may also be a digital signal processor (DSP), an application specific integrated circuit (ASIC), a field programmable gate array (FPGA ) or other programmable logic devices, discrete gates or transistor logic devices, or discrete hardware components. The methods, steps, and logical block diagrams as disclosed in embodiments of the present application can be implemented or performed. The general purpose processor may be a microprocessor, or the processor may also be any conventional processor, etc. The steps of the method disclosed in conjunction with the embodiments of the present application can be directly embodied as being performed by the hardware decoding processor or being performed with a combination of hardware and software modules in the decoding processor. The software module may be located in a random access memory, a flash memory, a read-only memory, a programmable read-only memory or an electrically rewritable programmable memory, a register, and other storage media well established in the art. The storage medium is located in the memory 401, and the processor 400 reads the information in the memory 401 and completes the steps of the above method in combination with its hardware.

The electrical device provided in embodiments of the present application is motivated by the same inventive concept as the motor control method provided in embodiments of the present application, and has the same beneficial effect as the method it employs, runs or implements.

An implementation of the present application further provides a computer-readable storage medium corresponding to the motor control method provided in the preceding implementations. With reference to FIG. 9, the computer-readable storage medium illustrated therein is an optical disk 30 on which a computer program (i.e., a program product) is stored, where the computer program, when run by a processor, executes the motor control method provided in any of the preceding implementations.

It is noted that examples of the computer-readable storage medium may also include, but not limited to, a phase-change random access memory (PRAM), a static random access memory (SRAM), a dynamic random access memory (DRAM) and other types of random access memory (RAM), a read-only memory (ROM), an electrically erasable programmable read-only memory (EEPROM), a flash memory, or other optical, magnetic storage media, which will not be repeated herein.

The computer-readable storage medium provided in the above embodiments of the present application is motivated by the same inventive concept as the motor control method provided in the embodiments of the present application, and has the same beneficial effect as the method employed, run or implemented by the application program stored therein.

Finally, it should be noted that: the aforementioned embodiments are only used for illustrating the technical solution of the present application, rather than limiting it. Although the present application has been described in detail with reference to the foregoing embodiments, it should be understood by those of ordinary skills in the art that: It is still possible to modify the technical solutions recited in the foregoing embodiments, or to conduct equivalent replacements on some or all of the technical features; and these modifications and replacements would not make the nature of the corresponding technical solutions depart from the scope of the technical solutions of embodiments of the present invention, and should all be covered by the claims and description of the present application. In particular, the technical features mentioned in the various embodiments can be combined in any manner as long as there is no structural conflict. The present application is not limited to the specific embodiments disclosed herein, but rather includes all technical solutions falling within the scope of the claims.

## Claims

1. A motor control method, wherein a neutral wire of a motor is connected to at least one standby power device, the method comprising:
determining motor faulty phases if it is detected in an operating process of the motor that the motor is faulty; and
controlling the motor faulty phases to switch from currently connected primary power devices to the standby power device.

2. The method according to claim 1, wherein the method further comprises:
determining a number of faulty phases of the motor; and
performing, when the number of faulty phases is smaller than or equal to a number of the standby power devices, the operation of controlling the motor faulty phases to switch from currently connected primary power devices to the standby power devices.

3. The method according to claim 1, wherein said determining motor faulty phases comprises:
acquiring motor sampling parameters for the operating process of the motor; and
determining motor faulty phases according to the motor sampling parameters.

4. The method according to claim 3, wherein the motor sampling parameters comprise at least one of a phase current and a phase voltage of each phase of the motor, a temperature of each phase of winding, and a temperature of each primary power device connected to the motor.

5. The method according to claim 3 or 4, wherein the motor sampling parameters comprise a phase current of each phase of the motor; and said determining motor faulty phases according to the motor sampling parameters comprises:
determining, if there is a phase current higher than a preset current threshold, a phase to which the phase current higher than the preset current threshold belongs as a motor faulty phase.

6. The method according to claim 3 or 4, wherein the motor sampling parameters comprise a phase current of each phase of the motor; and said determining motor faulty phases according to the motor sampling parameters comprises:
separately calculating a difference absolute value between phase currents of any two phases; and
determining, if there is a difference absolute value larger than a preset difference threshold, a phase with the highest phase current out of two phases corresponding to the difference absolute value larger than the preset difference threshold as a motor faulty phase.

7. The method according to claim 3 or 4, wherein the motor sampling parameters comprise a phase voltage of each phase of the motor; and said determining motor faulty phases according to the motor sampling parameters comprises:
determining, if there is a phase voltage with voltage change abnormality, a phase corresponding to the phase voltage with voltage change abnormality as a motor faulty phase.

8. The method according to claim 3 or 4, wherein the motor sampling parameters comprise a temperature of each phase of winding of the motor; and said determining motor faulty phases according to the motor sampling parameters comprises:
determining, if there is a temperature exceeding a first preset temperature interval, a phase corresponding to the temperature exceeding the first preset temperature interval as a motor faulty phase.

9. The method according to claim 3 or 4, wherein the motor sampling parameters comprise a temperature of each primary power device connected to the motor; and said determining motor faulty phases according to the motor sampling parameters comprises:
determining, if there is a primary power device the temperature of which exceeds a second preset temperature interval, a phase corresponding to the primary power device the temperature of which exceeds the second preset temperature interval as a motor faulty phase.

10. The method according to claim 2, wherein said controlling the motor faulty phases to switch from currently connected primary power devices to the standby power device comprises:
controlling the currently connected primary power devices for the motor faulty phases to be turned off; and
controlling standby power devices the number of which is the same as the number of faulty phases out of the at least one standby power device to be turned on.

11. The method according to any one of claims 1-4, wherein after said controlling the motor faulty phases to switch from currently connected primary power devices to the standby power device, the method further comprises:
continuing, if the number of remaining motor phases other than the motor faulty phases is larger than a preset number and there are unenabled standby power devices in the at least one standby power device, to detect whether new motor faulty phases appear in the remaining motor phases; and
switching, if the number of the new motor faulty phases is smaller than or equal to the number of the unenabled standby power devices, from primary power devices connected to the new motor faulty phases to the unenabled standby power devices.

12. The method according to any one of claims 1-4, wherein the method further comprises:
collecting operating parameters of an enabled standby power device and determining whether the enabled standby power device is faulty according to the operating parameters;
if it is determined that the enabled standby power device is faulty and there is currently an unenabled standby power device, turning off the faulty standby power device and controlling the unenabled standby power device to be turned on; and
controlling the motor to shut down if it is determined that the enabled standby power device is faulty and all standby power devices are enabled.

13. The method according to any one of claims 1-4, wherein before said controlling the motor faulty phases to switch from currently connected primary power devices to the standby power device, the method further comprises:
controlling the motor to shut down.

14. The method according to claim 2, wherein the method further comprises:
controlling the motor to shut down when the number of faulty phases is larger than the number of the standby power devices.

15. The method according to any one of claims 1-4, wherein the number of phases of the motor is larger than or equal to 3; and the number of the standby power devices is larger than or equal to 1 and smaller than or equal to the number of phases of the motor minus 2.

16. A motor control apparatus, wherein a neutral wire of a motor is connected to at least one standby power device, the apparatus comprising:
a faulty phase determination module for determining motor faulty phases if it is detected in an operating process of the motor that the motor is faulty; and
a faulty phase switching module for controlling the motor faulty phases to switch from currently connected primary power devices to the standby power device.

17. A motor control device comprising a power supply module, a motor, an inversion module, a control module, and at least one standby power device, wherein
the power supply module, the inversion module, and each standby power device are connected in parallel;
windings of the motor are connected in one-to-one correspondence with primary power devices in the inversion module;
the at least one standby power device is all connected to a neutral wire of the motor; and
the control module is used for determining motor faulty phases if it is detected in an operating process of the motor that the motor is faulty; and controlling the motor faulty phases to switch from currently connected primary power devices to the standby power device.

18. An electrical device comprising a memory, a processor, and a computer program stored on the memory and runnable on the processor, wherein the processor runs the computer program to implement a method according to any one of claims 1-15.

19. A computer-readable storage medium having a computer program stored thereon, wherein the program is executed by a processor to implement a method according to any one of claims 1-15.
